(19)

**Europäisches Patentamt**
**European Patent Office**
**Office européen des brevets**

(11) **EP 4 645 477 A1**

(12) **EUROPEAN PATENT APPLICATION**
published in accordance with Art. 153(4) EPC

(43) Date of publication:
**05.11.2025 Bulletin 2025/45**

(21) Application number: 23934534.1

(22) Date of filing: **27.04.2023**

(51) International Patent Classification (IPC):
**H01M 4/66** (2006.01)    **H01M 4/505** (2010.01)
**H01M 4/525** (2010.01)

(52) Cooperative Patent Classification (CPC):
**H01M 4/5825; H01M 4/131; H01M 4/136;**
**H01M 4/505; H01M 4/525;** Y02E 60/10

(86) International application number:
**PCT/CN2023/091177**

(87) International publication number:
**WO 2024/221337 (31.10.2024 Gazette 2024/44)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Contemporary Amperex Technology
Co., Limited**
**Ningde, Fujian 352100 (CN)**

(72) Inventors:
- **QIN, Yiming**
  **Ningde, Fujian 352100 (CN)**
- **SHANG, Yibo**
  **Ningde, Fujian 352100 (CN)**

- **XU, Xiaofu**
  **Ningde, Fujian 352100 (CN)**
- **PEI, Renjie**
  **Ningde, Fujian 352100 (CN)**
- **PAN, Jianfu**
  **Ningde, Fujian 352100 (CN)**
- **HE, Jianfu**
  **Ningde, Fujian 352100 (CN)**
- **YE, Yonghuang**
  **Ningde, Fujian 352100 (CN)**

(74) Representative: **Ziebig Hengelhaupt Intellectual
Property Attorneys
Patentanwaltskanzlei PartGmbB
Leipziger Straße 49
10117 Berlin (DE)**

(54) **POSITIVE ELECTRODE SHEET, BATTERY, AND ELECTRIC DEVICE**

(57) The present application provides a positive electrode sheet, a battery, and an electric device. The positive electrode sheet of the present application comprises a positive electrode current collector and a positive electrode film layer provided on at least one surface of the positive electrode current collector, wherein the positive electrode film layer comprises a first positive electrode film layer provided on the surface of the positive electrode current collector and a second positive electrode film layer provided on the surface of the first positive electrode film layer. The first positive electrode film layer comprises a first positive electrode active material, and the second positive electrode film layer comprises a second positive electrode active material; and the first positive electrode active material comprises compound $Li_aA_bMn_{1-c}B_cP_{1-d}R_dO_{4-n}D_n$, and the second positive electrode active material comprises compound $Li_xNi_yCo_zM_kMe_pO_rE_m$.

FIG. 1

**Description**

TECHNICAL FIELD

The present application relates to the technical field of secondary batteries, and in particular, to a positive electrode plate, a battery, and an electric device.

BACKGROUND

In recent years, with the increasingly widespread application of secondary batteries, they have been extensively used in energy storage power systems such as hydropower, thermal power, wind power, and solar power stations, as well as in various fields such as electric tools, electric bicycles, electric motorcycles, electric vehicles, military equipment, and aerospace. As secondary batteries have achieved great development, higher requirements have been placed on their rate capability, power, fast-charging performance, and cycle performance.

SUMMARY

The present application is conducted in view of the above issues, and its objective is to provide a positive electrode plate, a battery, and an electric device. The use of the positive electrode plate of the present application improves the low-temperature power and the low-temperature rate capability, enhances the fast-charging performance, and prolongs the cycle life of the battery.

In order to achieve the objective described above, a first aspect of the present application provides a positive electrode plate. The positive electrode plate includes a positive electrode current collector and a positive electrode film layer disposed on at least one surface of the positive electrode current collector, where the positive electrode film layer includes a first positive electrode film layer disposed on a surface of the positive electrode current collector and a second positive electrode film layer disposed on a surface of the first positive electrode film layer, where the first positive electrode film layer includes a first positive electrode active material, and the second positive electrode film layer includes a second positive electrode active material;

the first positive electrode active material includes a compound $Li_aA_bMn_{1-c}B_cP_{1-d}R_dO_{4-n}D_n$, where

A includes one or more elements of Zn, Al, Na, K, Mg, Nb, Mo, and W;

B includes one or more elements of Zn, Al, Na, K, Mg, Mo, W, Ti, V, Zr, Fe, Ni, Co, Ga, Sn, Sb, Nb, and Ge;

R includes one or more elements of B, Si, N, S, F, Cl, and Br;

D includes one or more elements of S, F, Cl, and Br;

a is 0.9 to 1.1, optionally 0.977 to 1; b is 0 to 0.1, optionally 0 to 0.001; c is 0.001 to 0.9, optionally 0.1 to 0.9 or 0.001 to 0.6; d is 0 to 0.1, optionally 0 to 0.001 or 0.001 to 0.1; n is 0 to 0.1, optionally 0 to 0.001 or 0.001 to 0.1;

the second positive electrode active material includes a compound $Li_xNi_yCo_zM_kMe_pO_rE_m$, where M includes one or two elements of Mn and Al; Me includes one or more elements of Zr, Zn, Cu, Cr, Mg, Fe, V, Ti, Sr, Sb, Y, W, and Nb; E includes one or more elements of N, F, S, and Cl; $0.85 \le x \le 1.15$; $0 < y \le 1$; $0 \le z < 1$; $0 < k < 1$; $0 \le p \le 0.1$; and $1 \le r \le 2$, $0 \le m \le 1$, and $m + r \le 2$.

In the present application, the first positive electrode active material and the second positive electrode active material are combined for use, such that the low-temperature power and the low-temperature rate capability (low-temperature discharge capacity retention rate) of the battery are improved, and the endurance time of the battery under low-temperature operating conditions is prolonged. In addition, including the second positive electrode active material and the first positive electrode active material respectively in the second and first positive electrode film layers vertically adjacent to each other is conducive to improving the lithium ion conduction rate of the positive electrode plate, thereby enhancing the fast-charging performance of the battery and prolonging the cycle life of the battery.

In any embodiment, B includes one or more elements of Fe, Ti, V, Ni, Co, and Mg; and/or
R includes any one of B, Si, N and S elements.

In any embodiment, a mass ratio of the first positive electrode active material to the second positive electrode active material is 5%-90%, optionally 10%-50%. Thus, this helps exert the complementary advantages of the first positive electrode active material and the second positive electrode active material, thereby further improving the low-temperature power and the low-temperature rate capability of the battery, and further enhancing the fast-charging performance and prolonging the cycle life of the battery.

In any embodiment, a lithium ion diffusion coefficient of the second positive electrode active material is greater than a lithium ion diffusion coefficient of the first positive electrode active material. Thus, the lithium ion conduction rate of the positive electrode plate is improved, thereby enhancing the fast-charging performance of the battery.

In any embodiment, a compaction density of the second positive electrode active material at a pressure of 3 tons is greater than a compaction density of the first positive electrode active material at a pressure of 3 tons. This helps ensure stable bonding between the first positive electrode film layer and the second positive electrode film layer, thereby reducing the resistance of the positive electrode plate and making the positive electrode plate easy to process.

In any embodiment, the second positive electrode active material is a single crystal or single-crystal-like material; and/or a Dv10 particle size of the positive electrode active material is 0.3-2.5 $\mu$m, optionally 0.5-1.5 $\mu$m Thus, the positive electrode plate is easier to process, thereby reducing the occurrence of roller sticking in cold pressing, cracking and film detachment of the electrode plate, or the like.

In any embodiment, a lithium ion diffusion coefficient of the first positive electrode active material at 25 °C is $10^{-16}$-$10^{-12}$ cm$^2$·s$^{-1}$, optionally $10^{-15}$-$10^{-13}$ cm$^2$·s$^{-1}$; and/or

a powder resistivity of the first positive electrode active material at 20 MPa is 2000-10000 $\Omega$·cm, optionally 3000-6000 $\Omega$·cm; and/or

a compaction density of the first positive electrode active material at a pressure of 3 tons is 1.9-3.1 g/cm$^3$, optionally 2.2-2.9 g/cm$^3$.

In any embodiment, a lithium ion solid-phase diffusion coefficient of the second positive electrode active material at 25 °C is $10^{-12}$-$10^{-8}$ cm$^2$·s$^{-1}$, optionally $10^{-11}$-$10^{-9}$ cm$^2$·s$^{-1}$; and/or

a powder resistivity of the second positive electrode active material at 20 MPa is 100-700 $\Omega$·cm, optionally 200-550 $\Omega$·cm; and/or

a compaction density of the second positive electrode active material at a pressure of 3 tons is 3-4.2 g/cm3, optionally 3.6-3.75 g/cm3.

The lithium ion diffusion coefficients of the first positive electrode active material and the second positive electrode active material are in the above range, and the lithium ion diffusion coefficient of the second positive electrode active material is greater than the lithium ion diffusion coefficient of the first positive electrode active material, helping improve the lithium ion conduction rate of the positive electrode plate, thereby enhancing the fast-charging performance of the battery. In addition, when the positive electrode plate breaks accidentally, the first positive electrode active material is more proximal to the positive electrode current collector, such that heat will be transferred to the first positive electrode active material first. The lithium ion diffusion coefficient of the first positive electrode active material is lower, and its high-temperature stability is correspondingly better, which can delay the transfer of heat to the second positive electrode active material, thereby improving the overall safety of the battery.

The powder resistivity of the first positive electrode active material and the second positive electrode active material is in the above range, and the powder resistivity of the first positive electrode active material is greater than the powder resistivity of the second positive electrode active material, helping improve the lithium ion conduction rate of the positive electrode plate, thereby enhancing the fast-charging performance of the battery.

The compaction densities of the first positive electrode active material and the second positive electrode active material are in the above range, and the compaction density of the second positive electrode active material is greater than the compaction density of the first positive electrode active material. In one aspect, this helps reduce the ductility of the first positive electrode active material, so as to alleviate the current collector breakage caused by the inconsistency of ductility between the positive electrode active material and the positive electrode current collector, thereby improving the safety and reliability of the positive electrode plate; in another aspect, during the cold pressing, since the second positive electrode active material contacts the cold pressing roller and has a higher compaction density, material particle crushing is less likely to occur.

In any embodiment, a ratio of a thickness of the first positive electrode film layer to a thickness of the second positive electrode film layer is 0.08-1.53, optionally 0.1-1.2, and more optionally 0.15-0.93; and/or a thickness of the positive electrode film layer is 60-300 $\mu$m.

Thus, this helps exert the complementary advantages of the first positive electrode active material and the second positive electrode active material, thereby further improving the low-temperature power and the low-temperature rate capability of the battery, and further enhancing the fast-charging performance and prolonging the cycle life of the battery.

In any embodiment, a power capability m of the positive electrode plate is calculated according to the following formula, and m is 2.93-87.62, optionally 3-13, and more optionally 3.81-12.67;

$$m = \sqrt{-\log_{10}\left(\frac{C_B \times PD_B \times N_A \times \ln M}{C_A \times PD_A \times N_B}\right)}$$

where

$PD_A$ represents a compaction density of the first positive electrode active material at a pressure of 3 tons in $g/cm^3$;

$C_A$ represents a lithium ion diffusion coefficient of the first positive electrode active material at 25 °C in $cm^2 \cdot s^{-1}$;

$N_A$ represents a powder resistivity of the first positive electrode active material at 20 MPa in $\Omega \cdot cm$;

$PD_B$ represents a compaction density of the second positive electrode active material at a pressure of 3 tons in $g/cm^3$;

$C_B$ represents a lithium ion diffusion coefficient of the second positive electrode active material at 25 °C in $cm^2 \cdot s^{-1}$;

$N_B$ represents a powder resistivity of the second positive electrode active material at 20 MPa in $\Omega \cdot cm$;

M represents a mass ratio of the first positive electrode active material to the second positive electrode active material.

Thus, the power capability m parameter of the positive electrode plate helps quantify differences when combining different first positive electrode active materials and second positive electrode active materials, thereby comparing and distinguishing the overall power capability of the positive electrode substrate. The power capability of the positive electrode plate in the above range is conducive to improving the low-temperature power and the low-temperature rate capability of the battery, enhancing the fast-charging performance and prolonging the cycle life of the battery.

In any embodiment, the first positive electrode active material includes a core and a cladding layer coating the core, where the core includes the compound $Li_aA_bMn_{1-c}B_cP_{1-d}R_dO_{4-n}D_n$, and the cladding layer includes one or more of pyrophosphate, phosphate, and carbon.

Thus, the cladding layer in the first positive electrode active material helps improve the electrical conductivity of the material and the lithium ion conduction rate of the material.

In any embodiment, the second positive electrode active material includes a core and a cladding layer coating the core, where the core includes the compound $Li_xNi_yCo_zM_kMe_pO_rE_m$, and the cladding layer includes one or more elements of Al, Ba, Zn, Ti, Co, W, Y, Si, Sn, B, and P.

Thus, the cladding layer in the second positive electrode active material helps inhibit the disproportionation reaction, thereby enhancing the cycle performance and improving the low-temperature rate capability of the material.

A second aspect of the present application provides a battery. The battery includes the positive electrode plate according to the first aspect of the present application.

In the present application, the battery includes, but is not limited to, a secondary battery, a battery pack, and a battery module, or the like.

A third aspect of the present application provides an electric device. The electric device includes the positive electrode plate according to the first aspect of the present application and the battery according to the second aspect of the present application.

BRIEF DESCRIPTION OF THE DRAWINGS

FIG. 1 is a schematic diagram of a secondary battery according to one embodiment of the present application.

FIG. 2 is an exploded view of the secondary battery according to one embodiment of the present application shown in FIG. 1.

FIG. 3 is a schematic diagram of a battery module according to one embodiment of the present application.

FIG. 4 is a schematic diagram of a battery pack according to one embodiment of the present application.

FIG. 5 is an exploded view of the battery pack according to one embodiment of the present application shown in FIG. 4.

FIG. 6 is a schematic diagram of an electric device using a secondary battery as a power source according to one embodiment of the present application.

Description of the reference numerals:

1: battery pack; 2: upper case body; 3: lower case body; 4: battery module; 5: secondary battery; 51: housing; 52: electrode assembly; 53: top cover assembly.

DETAILED DESCRIPTION

Hereinafter, the embodiments of the positive electrode plate, the secondary battery, the battery module, the battery pack, and the electric device of the present application are specifically disclosed in detail with appropriate reference to the drawings. However, unnecessarily detailed descriptions may be omitted. For example, detailed descriptions of well-known matters and repetitive descriptions of actually identical structures may be omitted. This is to avoid unnecessary lengthiness of the following descriptions and to facilitate understanding by those skilled in the art. Additionally, the drawings and the following descriptions are provided to enable those skilled in the art to fully understand the present application and are not intended to limit the subject matter recited in the claims.

The "ranges" disclosed in the present application are defined with lower and upper limits. A given range is defined by selecting a lower limit and an upper limit that delineate the boundaries of a particular range. Ranges defined in this manner may include or exclude the end values and can be combined arbitrarily, which means that any lower limit may be combined with any upper limit to form a range. For example, if ranges of 60-120 and 80-110 are listed for a particular parameter, it is understood that ranges of 60-110 and 80-120 are also anticipated. Additionally, if the minimum range values listed are 1 and 2, and the maximum range values listed are 3, 4, and 5, then the following ranges can all be anticipated: 1-3, 1-4, 1-5, 2-3, 2-4, and 2-5. In the present application, unless otherwise specified, the numerical range "a-b" indicates an abbreviated representation of any combination of real numbers between a and b, where both a and b are real numbers. For example, the numerical range "0-5" indicates that all real numbers between "0-5" are listed herein, and "0-5" is merely an abbreviated representation of a combination of these numerical values. Additionally, when stating that a parameter is an integer $\geq 2$, it is equivalent to disclosing that the parameter is, for example, an integer of 2, 3, 4, 5, 6, 7, 8, 9, 10, 11, 12, or the like.

Unless otherwise specified, all embodiments and optional embodiments of the present application can be combined with one another to form new technical solutions.

Unless otherwise specified, all technical features and optional technical features of the present application can be combined with one another to form new technical solutions.

Unless otherwise specified, all steps of the present application can be performed sequentially or randomly, preferably sequentially. For example, if the method includes steps (a) and (b), it indicates that the method may include steps (a) and (b) performed sequentially or steps (b) and (a) performed sequentially. For example, if the mentioned method may further include step (c), it indicates that step (c) may be added to the method in any order; for example, the method may include steps (a), (b), and (c), or steps (a), (c), and (b), or steps (c), (a), and (b), or the like.

Unless otherwise specified, the "include" and "comprise" mentioned in the present application are open-ended or closed-ended. For example, the "include" and "comprise" may mean that other unlisted components may also be included or comprised or that only the listed components are included or comprised.

Unless otherwise specified, the term "or" in the present application is inclusive. For example, the phrase "A or B" means "A, B, or both A and B". More specifically, any one of the following conditions satisfies the condition "A or B": A is true (or present) and B is false (or absent); A is false (or absent) and B is true (or present); or both A and B are true (or present).

Unless otherwise specified, the term "single crystal/single-crystal-like particle" in the present application refers to a single particle (i.e., a primary particle).

Unless otherwise specified, the terms "secondary particle" and "polycrystalline material particle" in the present application generally have similar meanings, referring to a particle formed by agglomeration of more than 100 primary particles with an average particle size in the range of 50-800 nm.

Unless otherwise specified, the term "Dv10 particle size" in the present application refers to a particle size at which the cumulative volume reaches 10% from the small particle size side in a volume-based particle size distribution.

[Secondary Battery]

Secondary batteries, also known as rechargeable batteries or storage batteries, refer to batteries that can continue to be used by reactivating their active materials through charging after discharging.

Typically, a secondary battery includes a positive electrode plate, a negative electrode plate, a separator, and an electrolytic solution. During the charging and discharging process of the battery, active ions (for example, lithium ions) are intercalated and deintercalated back and forth between the positive electrode plate and the negative electrode plate. The separator is disposed between the positive electrode plate and the negative electrode plate to primarily prevent the positive and negative electrodes from short-circuiting, while allowing the passage of active ions. The electrolytic solution is between the positive electrode plate and the negative electrode plate, and primarily functions to conduct active ions.

[Positive Electrode Plate]

One embodiment of the present application provides a positive electrode plate. The positive electrode plate includes a positive electrode current collector and a positive electrode film layer disposed on at least one surface of the positive electrode current collector. The positive electrode film layer includes a first positive electrode film layer disposed on a surface of the positive electrode current collector and a second positive electrode film layer disposed on the surface of the first positive electrode film layer. The first positive electrode film layer includes a first positive electrode active material, and the second positive electrode film layer includes a second positive electrode active material.

The first positive electrode active material includes a compound $Li_aA_bMn_{1-c}B_cP_{1-d}R_dO_{4-n}D_n$, where

A includes one or more elements of Zn, Al, Na, K, Mg, Nb, Mo, and W;

B includes one or more elements of Zn, Al, Na, K, Mg, Mo, W, Ti, V, Zr, Fe, Ni, Co, Ga, Sn, Sb, Nb, and Ge;

R includes one or more elements of B, Si, N, S, F, Cl, and Br;

D includes one or more elements of S, F, Cl, and Br;

a is 0.9 to 1.1, optionally 0.977 to 1, for example, 0.95, 0.97, 1, 1.05, 1.1, and a range formed by any of the values described above; b is 0 to 0.1, optionally 0 to 0.001, for example, 0, 0.001, 0.003, 0.005, 0.008, 0.1, and a range formed by any of the values described above; c is 0.001 to 0.9, optionally 0.1 to 0.9 or 0.001 to 0.6, for example, 0.005, 0.01, 0.05, 0.1, 0.2, 0.3, 0.5, 0.7, 0.8, 0.9, and a range formed by any of the values described above; d is 0 to 0.1, optionally 0 to 0.001 or 0.001 to 0.1, for example, 0, 0.01, 0.05, 0.07, 0.1, and a range formed by any of the values described above; and n is 0 to 0.1, optionally 0 to 0.001 or 0.001 to 0.1, for example, 0, 0.01, 0.05, 0.07, 0.1, and a range formed by any of the values described above.

The second positive electrode active material includes a compound $Li_xNi_yCo_zM_kMe_pO_rE_m$. M includes one or two elements of Mn and Al. Me includes one or more elements of Zr, Zn, Cu, Cr, Mg, Fe, V, Ti, Sr, Sb, Y, W, and Nb. E includes one or more elements of N, F, S, and Cl. $0.85 \leq x \leq 1.15$, for example, x is 0.9, 0.95, 1, 1.05, 1.1, 1.15, and a range formed by any of the values described above. $0 < y \leq 1$, for example, y is 0.1, 0.2, 0.3, 0.4, 0.5, 0.6, 0.7, 0.8, 0.9, 1, and a range formed by any of the values described above. $0 \leq z < 1$, for example, z is 0, 0.1, 0.2, 0.3, 0.4, 0.5, 0.6, 0.7, 0.8, 0.9, 0.99, and a range formed by any of the values described above. $0 < k < 1$, for example, k is 0.1, 0.2, 0.3, 0.4, 0.5, 0.6, 0.7, 0.8, 0.9, 0.99, and a range formed by any of the values described above. $0 \leq p \leq 0.1$, for example, p is 0, 0.01, 0.02, 0.03, 0.05, 0.07, 0.08, 0.09, 0.1, and a range formed by any of the values described above. $1 \leq r \leq 2$, for example, r is 1, 1.1, 1.3, 1.5, 1.7, 1.8, 2, and a range formed by any of the values described above. $0 \leq m \leq 1$, for example, m is 0, 0.1, 0.2, 0.5, 0.7, 0.8, 1, and a range formed by any of the values described above, and $m + r \leq 2$, optionally equal to 2.

Existing lithium iron phosphate-type positive electrode active materials are poor in low-temperature rate capability and electrical conductivity, resulting in poor capacity performance under low-temperature operating conditions and short endurance time. Existing ternary positive electrode active materials exhibit low low-temperature power, making them prone to undervoltage when discharging at high currents under low-temperature operating conditions.

Although the mechanism is not clear, the applicant unexpectedly discovered that in the present application, the first positive electrode active material and the second positive electrode active material are combined for use, such that the low-temperature power and the low-temperature rate capability of the battery are improved, and the endurance time of the battery under low-temperature operating conditions is prolonged. In addition, including the second positive electrode active material and the first positive electrode active material respectively in the second and first positive electrode film layers vertically adjacent to each other is conducive to improving the lithium ion conduction rate of the positive electrode plate, thereby enhancing the fast-charging performance of the battery and prolonging the cycle life of the battery.

In some embodiments, B includes one or more elements of Fe, Ti, V, Ni, Co, and Mg; and/or
R includes any one of B, Si, N and S elements.

In some embodiments, the mass ratio of the first positive electrode active material to the second positive electrode active material is 5%-90%, optionally 10%-50%, for example, 5%, 10%, 20%, 30%, 40%, 50%, 60%, 70%, 80%, 90%, and a range formed by any of the values described above. Thus, this helps exert the complementary advantages of the first positive electrode active material and the second positive electrode active material, thereby further improving the low-temperature power and the low-temperature rate capability of the battery, and further enhancing the fast-charging performance and prolonging the cycle life of the battery.

In some embodiments, the lithium ion diffusion coefficient of the second positive electrode active material is greater than the lithium ion diffusion coefficient of the first positive electrode active material. Thus, the lithium ion conduction rate of the positive electrode plate is improved, thereby enhancing the fast-charging performance of the battery.

In some embodiments, the compaction density of the second positive electrode active material at a pressure of 3 tons is greater than the compaction density of the first positive electrode active material at a pressure of 3 tons. This helps ensure stable bonding between the first positive electrode film layer and the second positive electrode film layer, thereby reducing the resistance of the positive electrode plate and making the positive electrode plate easy to process.

In some embodiments, the second positive electrode active material is a single crystal or single-crystal-like material; and/or
the Dv10 particle size of the second positive electrode active material is 0.3-2.5 $\mu$m, optionally 0.5-1.5 $\mu$m, for example, 0.3 $\mu$m, 0.4 $\mu$m, 0.5 $\mu$m, 0.6 $\mu$m, 0.7 $\mu$m, 0.8 $\mu$m, 1 $\mu$m, 1.2 $\mu$m, 1.3 $\mu$m, 1.5 $\mu$m, 1.7 $\mu$m, 1.9 $\mu$m, 2 $\mu$m, 2.3 $\mu$m, 2.5 $\mu$m, and a range formed by any of the values described above.

Thus, the positive electrode plate is easier to process, thereby reducing the occurrence of roller sticking in cold pressing, cracking and film detachment of the electrode plate, or the like.

In some embodiments, the crystal type can be tested using a scanning electron microscope. For example, after the test using a scanning electron microscope, if the number and average particle size of the primary particles in more than 50% (including 50%) of the collected agglomerated particles meet the definition of "polycrystalline material particle" described above, the positive electrode active material is a polycrystalline material; otherwise, it is a single crystal or single-crystal-like material.

In some embodiments, the Dv10 particle size is tested using conventional methods in the art. For example, the test can be performed using a laser particle size analyzer (Malvern, Mastersizer 2000E), the solvent used in the test is water, and ultrasound is used for dispersion.

In some embodiments, the lithium ion diffusion coefficient of the first positive electrode active material at 25 °C is $10^{-16}$-$10^{-12}$ cm$^2\cdot$s$^{-1}$, optionally $10^{-15}$-$10^{-13}$ cm$^2\cdot$s$^{-1}$, for example, $10^{-16}$ cm$^2\cdot$s$^{-1}$, $10^{-15}$ cm$^2\cdot$s$^{-1}$, $10^{-14}$ cm$^2\cdot$s$^{-1}$, $10^{-13}$ cm$^2\cdot$s$^{-1}$, $10^{-12}$ cm$^2\cdot$s$^{-1}$, and a range formed by any of the values described above; and/or

the powder resistivity of the first positive electrode active material at 20 MPa is 2000-10000 $\Omega\cdot$cm, optionally 3000-6000 $\Omega\cdot$cm, for example, 2000 $\Omega\cdot$cm, 3000 $\Omega\cdot$cm, 4000 $\Omega\cdot$cm, 5000 $\Omega\cdot$cm, 6000 $\Omega\cdot$cm, 7000 $\Omega\cdot$cm, 8000 $\Omega\cdot$cm, 9000 $\Omega\cdot$cm, 10000 $\Omega\cdot$cm, and a range formed by any of the values described above; and/or

the compaction density of the first positive electrode active material at a pressure of 3 tons is 1.9-3.1 g/cm$^3$, optionally 2.2-2.9 g/cm$^3$, for example, 1.9 g/cm$^3$, 2 g/cm$^3$, 2.1 g/cm$^3$, 2.2 g/cm$^3$, 2.3 g/cm$^3$, 2.5 g/cm$^3$, 2.6 g/cm$^3$, 2.7 g/cm$^3$, 2.8 g/cm$^3$, 2.9 g/cm$^3$, 3.0 g/cm$^3$, 3.1 g/cm$^3$, and a range formed by any of the values described above.

In some embodiments, the lithium ion diffusion coefficient of the second positive electrode active material at 25 °C is $10^{-12}$-$10^{-8}$ cm$^2\cdot$s$^{-1}$, optionally $10^{-11}$-$10^{-9}$ cm$^2\cdot$s$^{-1}$, for example, $10^{-12}$ cm$^2\cdot$s$^{-1}$, $10^{-11}$ cm$^2\cdot$s$^{-1}$, $10^{-10}$ cm$^2\cdot$s$^{-1}$, $10^{-9}$ cm$^2\cdot$s$^{-1}$, $10^{-8}$ cm$^2\cdot$s$^{-1}$, and a range formed by any of the values described above; and/or

the powder resistivity of the second positive electrode active material at 20 MPa is 100-700 $\Omega\cdot$cm, optionally 200-550 $\Omega\cdot$cm, for example, 100 $\Omega\cdot$cm, 200 $\Omega\cdot$cm, 300 $\Omega\cdot$cm, 400 $\Omega\cdot$cm, 500 $\Omega\cdot$cm, 600 $\Omega\cdot$cm, 700 $\Omega\cdot$cm, and a range formed by any of the values described above; and/or

the compaction density of the second positive electrode active material at a pressure of 3 tons is 3-4.2 g/cm$^3$, optionally 3.6-3.75 g/cm$^3$, for example, 3 g/cm$^3$, 3.1 g/cm$^3$, 3.3 g/cm$^3$, 3.5 g/cm$^3$, 3.6 g/cm$^3$, 3.8 g/cm$^3$, 3.9 g/cm$^3$, 4.0 g/cm$^3$, 4.1 g/cm$^3$, 4.2 g/cm$^3$, and a range formed by any of the values described above.

The lithium ion diffusion coefficients of the first positive electrode active material and the second positive electrode active material are in the above range, and the lithium ion diffusion coefficient of the second positive electrode active material is greater than the lithium ion diffusion coefficient of the first positive electrode active material, helping improve the lithium ion conduction rate of the positive electrode plate, thereby enhancing the fast-charging performance of the battery. In addition, when the positive electrode plate breaks accidentally, the first positive electrode active material is more proximal to the positive electrode current collector, such that heat will be transferred to the first positive electrode active material first. The lithium ion diffusion coefficient of the first positive electrode active material is lower, and its high-temperature stability is correspondingly better, which can delay the transfer of heat to the second positive electrode active material, thereby improving the overall safety of the battery.

The powder resistivity of the first positive electrode active material and the second positive electrode active material is in the above range, and the powder resistivity of the first positive electrode active material is greater than the powder resistivity of the second positive electrode active material, helping improve the lithium ion conduction rate of the positive electrode plate, thereby enhancing the fast-charging performance of the battery.

The compaction densities of the first positive electrode active material and the second positive electrode active material are in the above range, and the compaction density of the second positive electrode active material is greater than the compaction density of the first positive electrode active material. In one aspect, this helps reduce the ductility of the first positive electrode active material, so as to alleviate the current collector breakage caused by the inconsistency of ductility between the positive electrode active material and the positive electrode current collector, thereby improving the safety and reliability of the positive electrode plate; in another aspect, during the cold pressing, since the second positive electrode active material contacts the cold pressing roller and has a higher compaction density, material particle crushing is less likely to occur.

In some embodiments, the lithium ion diffusion coefficient is tested using conventional methods in the art, such as the methods in the literature "Xie et al., Solid State Ionics, 2007, 178:1218-1224; Yang et al., Electrochimica Acta, 2012, 66:88-93".

In some embodiments, the powder resistivity is tested using conventional methods in the art. For example, an appropriate amount of powder may be weighed and placed in a sample chamber (with a depth of 20 mm and a cross-sectional area of 1 $cm^2$) of a powder resistivity tester, pressure is applied until it reaches 20 MPa, and then the test result of the powder resistivity at 20 MPa is recorded.

In some embodiments, the compaction density at a pressure of 3 tons is tested using conventional methods in the art. For example, $\omega$ (g) of the powder of the material to be tested may be placed in a die (with a bottom area of $\alpha$ ($cm^2$)) of an electronic compression tester, the pressure is adjusted to 3 tons, and after 30 s of pressure holding, the height h (cm) of the obtained powder compact is read. The compaction density P.D of the material to be tested at a pressure of 3 tons is calculated according to the following formula:

$$P.D = \omega/(\alpha \times h) \quad .$$

In some embodiments, the ratio of the thickness of the first positive electrode film layer to the thickness of the second positive electrode film layer is 0.08-1.53, optionally 0.1-1.2, and more optionally 0.15-0.93, for example, 0.08, 0.1, 0.12, 0.3, 0.5, 0.6, 0.7, 0.9, 1.0, 1.1, 1.2, 1.3, 1.4, 1.5, 1.6, and a range formed by any of the values described above; and/or the thickness of the positive electrode film layer is 60-300 $\mu$m, for example, 70 $\mu$m, 80 $\mu$m, 100 $\mu$m, 120 $\mu$m, 150 $\mu$m, 170 $\mu$m, 200 $\mu$m, 220 $\mu$m, 250 $\mu$m, 270 $\mu$m, 290 $\mu$m, 300 $\mu$m, and a range formed by any of the values described above.

Thus, this helps exert the complementary advantages of the first positive electrode active material and the second positive electrode active material, thereby further improving the low-temperature power and the low-temperature rate capability of the battery, and further enhancing the fast-charging performance and prolonging the cycle life of the battery.

In some embodiments, the thickness of the positive electrode film layer is tested using conventional methods in the art. For example, the test can be performed using a micrometer.

In some embodiments, the power capability m of the positive electrode plate is calculated according to the following formula, and m is 2.93-87.62, optionally 3-13, and more optionally 3.81-12.67, for example, 2.93, 3, 5, 8, 10, 11, 12, 13, 14, 15, 16, 17, 20, 25, 30, 35, 40, 50, 60, 70, 75, 80, 85, 87, 87.62, and a range formed by any of the values described above;

$$m = \sqrt{-\log_{10}\left(\frac{C_B \times PD_B \times N_A \times \ln M}{C_A \times PD_A \times N_B}\right)}$$

where

$PD_A$ represents the compaction density of the first positive electrode active material at a pressure of 3 tons in g/$cm^3$;
$C_A$ represents the lithium ion diffusion coefficient of the first positive electrode active material at 25 °C in $cm^2 \cdot s^{-1}$;

$N_A$ represents the powder resistivity of the first positive electrode active material at 20 MPa in $\Omega\cdot cm$;

$PD_B$ represents the compaction density of the second positive electrode active material at a pressure of 3 tons in $g/cm^3$;

$C_B$ represents the lithium ion diffusion coefficient of the second positive electrode active material at 25 °C in $cm^2\cdot s^{-1}$;

$N_B$ represents the powder resistivity of the second positive electrode active material at 20 MPa in $\Omega\cdot cm$;

M represents the mass ratio of the first positive electrode active material to the second positive electrode active material.

Thus, the power capability m parameter of the positive electrode plate helps quantify differences when combining different first positive electrode active materials and second positive electrode active materials, thereby comparing and distinguishing the overall power capability of the positive electrode substrate. The power capability of the positive electrode plate in the above range is conducive to improving the low-temperature power and the low-temperature rate capability of the battery, and enhancing the fast-charging performance of the battery.

In some embodiments, the first positive electrode active material includes a core and a cladding layer coating the core. The core includes the compound $Li_aA_bMn_{1-c}B_cP_{1-d}R_dO_{4-n}D_n$, and the cladding layer includes one or more of pyrophosphate, phosphate, and carbon.

Thus, the cladding layer in the first positive electrode active material helps improve the electrical conductivity of the material and the lithium ion conduction rate of the material.

In some embodiments, the second positive electrode active material includes a core and a cladding layer coating the core. The core includes the compound $Li_xNi_yCo_zM_kMe_pO_rE_m$, and the cladding layer includes one or more elements of Al, Ba, Zn, Ti, Co, W, Y, Si, Sn, B, and P.

Thus, the cladding layer in the second positive electrode active material helps inhibit the disproportionation reaction, thereby enhancing the cycle performance and improving the low-temperature rate capability of the material.

In some embodiments, the method for preparing the first positive electrode active material of the present application includes the following steps:

(1) dissolving a manganese source, a source of an element B, and an acid in a solvent, stirring the mixture to generate a suspension of a manganese salt doped with an element B, filtering the suspension and drying a filter cake to obtain a manganese salt doped with an element B;

(2) adding a lithium source, a phosphorus source, a source of an element A, a source of an element R, and a source of an element D, a solvent, and the manganese salt doped with an element B obtained in step (1) to a reaction vessel for grinding and mixing to obtain a slurry;

(3) transferring the slurry obtained in step (2) to a spray dryer for spray drying and granulation to obtain particles; and

(4) sintering the particles obtained in step (3).

In some embodiments, the source of an element A is selected from at least one of a simple substance, oxide, phosphate, oxalate, carbonate, and sulfate of an element A. The source of an element B is selected from at least one of a simple substance, oxide, phosphate, oxalate, carbonate, and sulfate of an element B. The source of an element R is selected from at least one of sulfate, borate, nitrate, and silicate of an element R. The source of an element D is selected from at least one of a simple substance and an ammonium salt of an element D. By selecting the sources of doping elements, the uniformity of the distribution of the doping elements can be improved, thereby improving the performance of the material.

In some embodiments, the acid is selected from one or more of hydrochloric acid, sulfuric acid, nitric acid, phosphoric acid, organic acids (such as oxalic acid), or the like. For example, the acid may be oxalic acid. In some embodiments, the acid is a dilute acid with a concentration of 60 wt% or less.

In some embodiments, the manganese source may be a manganese-containing substance known in the art that can be used to prepare lithium manganese phosphate. For example, the manganese source may be selected from elemental manganese, manganese dioxide, manganese phosphate, manganese oxalate, manganese carbonate, or a combination thereof.

In some embodiments, the lithium source may be a lithium-containing substance known in the art that can be used to prepare lithium manganese phosphate. For example, the lithium source may be selected from one of lithium carbonate, lithium hydroxide, lithium phosphate, lithium dihydrogen phosphate, or a combination thereof.

In some embodiments, the phosphorus source may be a phosphorus-containing substance known in the art that can be used to prepare lithium manganese phosphate. For example, the phosphorus source may be selected from one of diammonium hydrogen phosphate, ammonium dihydrogen phosphate, ammonium phosphate, and phosphoric acid, or a combination thereof.

The amount of each source of the elements A, B, R, and D added depends on the target doping amount, and the ratio of the amount of the lithium source, the manganese source, and the phosphorus source is in accordance with the stoichiometric ratio.

In some embodiments, the solvents in step (1) and step (2) may independently be solvents commonly used by those skilled in the art in the preparation of manganese salts and lithium manganese phosphate. For example, the solvents may be independently selected from at least one of ethanol and water (for example, deionized water).

As an example, the positive electrode current collector has two surfaces opposite to each other in its own thickness direction, and the positive electrode film layer is disposed on any one or both of the two opposite surfaces of the positive electrode current collector.

In some embodiments, a metal foil or a composite current collector may be used as the positive electrode current collector. For example, as the metal foil, an aluminum foil may be used. The composite current collector may include a polymer material substrate and a metal layer formed on at least one surface of the polymer material substrate. The composite current collector can be fabricated by forming a metal material (aluminum, aluminum alloy, nickel, nickel alloy, titanium, titanium alloy, silver, silver alloy, or the like) on a polymer material substrate (such as polypropylene (PP), polyethylene terephthalate (PET), polybutylene terephthalate (PBT), polystyrene (PS), and polyethylene (PE)).

In some embodiments, the positive electrode film layer further optionally includes a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorinated acrylic resin.

In some embodiments, the positive electrode film layer further optionally includes a conductive agent. As an example, the conductive agent may include at least one of superconducting carbon, acetylene black, carbon black, Ketjen black, a carbon dot, a carbon nanotube, a graphene, and a carbon nanofiber.

In some embodiments, the positive electrode plate can be prepared in the following manner: dispersing the components described above for preparing the positive electrode plate, for example, the positive electrode active material, the conductive agent, the binder, and any other components, in a solvent (for example, N-methylpyrrolidone) to form a positive electrode slurry; and coating the positive electrode current collector with the positive electrode slurry, and performing drying, cold pressing, and other processes, such that the positive electrode plate can be obtained.

[Negative Electrode Plate]

The negative electrode plate includes a negative electrode current collector and a negative electrode film layer disposed on at least one surface of the negative electrode current collector, and the negative electrode film layer includes a negative electrode active material.

As an example, the negative electrode current collector has two surfaces opposite to each other in its own thickness direction, and the negative electrode film layer is disposed on any one or both of the two opposite surfaces of the negative electrode current collector.

In some embodiments, a metal foil or a composite current collector may be used as the negative electrode current collector. For example, as the metal foil, a copper foil may be used. The composite current collector may include a polymer material substrate and a metal layer formed on at least one surface of the polymer material substrate. The composite current collector can be fabricated by forming a metal material (copper, copper alloy, nickel, nickel alloy, titanium, titanium alloy, silver, silver alloy, or the like) on a polymer material substrate (such as polypropylene (PP), polyethylene terephthalate (PET), polybutylene terephthalate (PBT), polystyrene (PS), and polyethylene (PE)).

In some embodiments, a negative electrode active material for use in batteries known in the art may be used as the negative electrode active material. As an example, the negative electrode active material may include at least one of the following materials: artificial graphite, natural graphite, soft carbon, hard carbon, a silicon-based material, a tin-based material, lithium titanate, or the like. The silicon-based material may be selected from at least one of elemental silicon, a silicon-oxygen compound, a silicon-carbon composite, a silicon-nitrogen composite, and a silicon alloy. The tin-based material may be selected from at least one of elemental tin, a tin-oxygen compound, and a tin alloy. However, the present application is not limited to these materials, and other conventional materials that can be used as negative electrode active materials for batteries may also be used. These negative electrode active materials may be used alone or in combination of two or more.

In some embodiments, the negative electrode film layer further optionally includes a binder. As an example, the binder may be selected from at least one of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally includes a conductive agent. As an example, the conductive agent may be selected from at least one of superconducting carbon, acetylene black, carbon black, Ketjen black, a carbon dot, a carbon nanotube, graphene, and a carbon nanofiber.

In some embodiments, the negative electrode film layer further optionally includes other auxiliary agents, such as a thickener (such as sodium carboxymethylcellulose (CMC-Na)).

In some embodiments, the negative electrode plate can be prepared in the following manner: dispersing the components described above for preparing the negative electrode plate, for example, the negative electrode active material, the conductive agent, the binder, and any other components, in a solvent (for example, deionized water) to form a negative electrode slurry; and coating the negative electrode current collector with the negative electrode slurry, and performing drying, cold pressing, and other processes, such that the negative electrode plate can be obtained.

[Electrolyte]

The electrolyte conducts ions between the positive electrode plate and the negative electrode plate. The present application has no specific restrictions on the type of the electrolyte, which can be selected according to needs. For example, the electrolyte may be liquid, gel, or all solid.

In some embodiments, the electrolyte is liquid and includes an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalate)borate, lithium difluorobis(oxalato)phosphate, and lithium tetrafluoro(oxalato)phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone.

In some embodiments, the electrolytic solution further optionally includes an additive. As an example, the additive may include a negative electrode film-forming additive, a positive electrode film-forming additive, and may also include an additive capable of enhancing certain performance of the batteries, such as an additive for enhancing the overcharge performance of the batteries, an additive for enhancing the high- or low-temperature performance of the batteries, or the like.

[Separator]

In some embodiments, the secondary battery further includes a separator. The present application does not particularly limit the type of the separator, and any porous-structure separator known to have good chemical stability and mechanical stability may be selected and used.

In some embodiments, the separator may be made of a material selected from at least one of glass fiber, non-woven fabric, polyethylene, polypropylene, and polyvinylidene difluoride. The separator may be a single-layer film or a multi-layer composite film, and there is no particular limitation on this. When the separator is a multi-layer composite film, the materials of the layers may be the same or different, and there is no particular limitation on this.

In some embodiments, the positive electrode plate, the negative electrode plate, and the separator may be manufactured into an electrode assembly through a winding process or a stacking process.

In some embodiments, the secondary battery may include an outer packaging. The outer packaging can be used for packaging the electrode assembly and electrolyte described above.

In some embodiments, the outer packaging of the secondary battery may be a hard shell, for example, a hard plastic shell, an aluminum shell, a steel shell, or the like. The outer packaging of the secondary battery may also be a soft pack, for example, a pouch-type soft pack. The soft pack may be made of plastic, and examples of the plastic may include polypropylene, polybutylene terephthalate, polybutylene succinate, or the like.

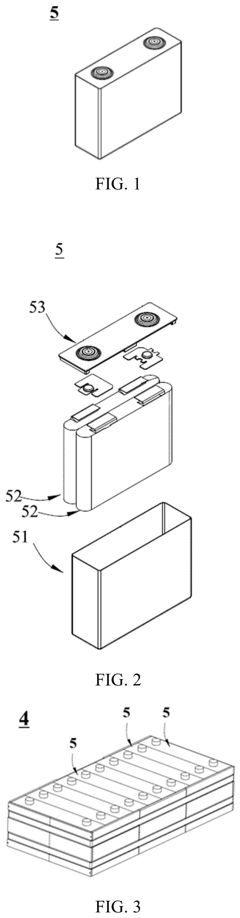

The present application does not particularly limit the shape of the secondary battery, and it may have a cylindrical shape, a prismatic shape, or any other shape. For example, FIG. 1 shows a secondary battery 5 having a prismatic structure as one example.

In some embodiments, referring to FIG. 2, the outer packaging may include a housing 51 and a cover plate 53. The housing 51 may include a bottom plate and a side plate connected to the bottom plate, and the bottom plate and the side plate define, in an enclosing manner, an accommodating cavity. The housing 51 is provided with an opening communicating with the accommodating cavity, and the cover plate 53 is capable of lidding the opening to close the accommodating cavity. The positive electrode plate, the negative electrode plate, and the separator may be subjected to a winding process or a stacking process to form an electrode assembly 52. The electrode assembly 52 is packaged in the accommodating cavity. The electrolytic solution is infiltrated into the electrode assembly 52. The number of the electrode assembly 52 included in the secondary battery 5 may be one or more, and those skilled in the art can select the number according to specific and actual needs.

In some embodiments, the secondary battery may be assembled into a battery module. The number of secondary batteries included in the battery module may be one or more, and the specific number may be selected by those skilled in the art based on the use and capacity of the battery module.

FIG. 3 shows a battery module 4 as one example. Referring to FIG. 3, in the battery module 4, a plurality of secondary batteries 5 may be sequentially arranged in a length direction of the battery module 4. Certainly, the arrangement may also be in any other manner. Further, the plurality of secondary batteries 5 may be fixed by a fastener.

Optionally, the battery module 4 may further include a shell having an accommodating space in which the plurality of secondary batteries 5 are accommodated.

In some embodiments, the battery module described above may also be assembled into a battery pack. The number of battery modules included in the battery pack may be one or more, and the specific number may be selected by those skilled in the art based on the use and capacity of the battery pack.

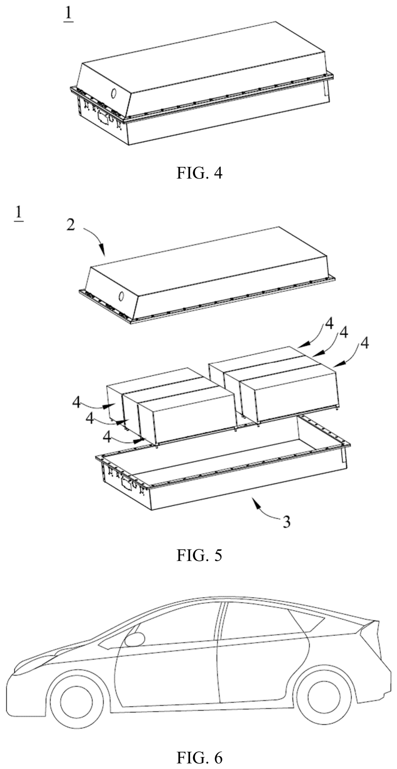

FIG. 4 and FIG. 5 show a battery pack 1 as one example. Referring to FIG. 4 and FIG. 5, the battery pack 1 may include a battery case and a plurality of battery modules 4 arranged in the battery case. The battery case includes an upper case body 2 and a lower case body 3. The upper case body 2 is capable of lidding the lower case body 3 to form a closed space for accommodating the battery modules 4. The plurality of battery modules 4 may be arranged in any manner in the battery case.

In addition, the present application further provides an electric device. The electric device includes at least one of the secondary battery, the battery module, or the battery pack according to the present application. The secondary battery, the battery module, or the battery pack can be used as a power source for the electric device, and they can also be used as an energy storage unit for the electric device. The electric device may include, but is not limited to, a mobile device (for example, a mobile phone or a laptop computer), an electric vehicle (for example, a pure electric vehicle, a hybrid electric vehicle, a plug-in hybrid electric vehicle, an electric bicycle, an electric scooter, an electric golf cart, or an electric truck), an electric train, ship, or satellite, an energy storage system, or the like.

As the electric device, a secondary battery, a battery module, or a battery pack may be selected based on its usage requirements.

FIG. 6 shows an electric device as one example. The electric device is a pure electric vehicle, a hybrid electric vehicle, a plug-in hybrid electric vehicle, or the like. To meet the requirements of the electric device for high power and high energy density of the secondary battery, the battery pack or the battery module may be used.

[Examples]

Hereinafter, examples of the present application are described. The examples described below are illustrative and are merely used to explain the present application, and they should not be construed as limiting the present application. The examples without techniques or conditions specified therein are implemented according to techniques or conditions described in the literature in the art or according to product instructions. Reagents or instruments used herein without specified manufacturers are all commercially available conventional products.

**Example 1**

(1) First positive electrode active material: $LiMn_{0.4}Fe_{0.6}PO_4$.

Second positive electrode active material: $LiNi_{0.55}Co_{0.1}Mn_{0.35}O_2$.

(3) Preparation of positive electrode plate:

The first positive electrode active material, a binder polyvinylidene fluoride (PVDF), and a conductive agent acetylene black were dissolved in a solvent N-methylpyrrolidone (NMP) according to a mass ratio of 90:5:5, and the mixture was fully stirred and well mixed to prepare a first positive electrode slurry; the second positive electrode active material, a binder polyvinylidene fluoride (PVDF), and a conductive agent acetylene black were dissolved in a solvent N-methylpyrrolidone (NMP) according to a mass ratio of 90:5:5, and the mixture was fully stirred and well mixed to prepare a second positive electrode slurry; a positive electrode current collector aluminum foil was evenly coated with the first positive electrode slurry, and dried to obtain a positive electrode current collector coated with the first positive electrode film layer; and the surface of the first positive electrode film layer was evenly coated with the second positive electrode slurry, followed by drying, cold pressing, and cutting to obtain a positive electrode plate.

(4) Preparation of negative electrode plate: The negative electrode active material artificial graphite, a conductive agent acetylene black, a binder styrene-butadiene rubber (SBR), and a thickener sodium carboxymethylcellulose (CMC-Na) were dissolved in deionized water according to a mass ratio of 95:2:1:2, and the mixture was fully stirred and well mixed to prepare a negative electrode slurry; and a negative electrode current collector copper foil was evenly coated with the negative electrode slurry, followed by drying, cold pressing, and cutting to obtain a negative electrode plate.

(5) Separator: A PE film was selected as the separator.

(6) Preparation of electrolytic solution: Ethylene carbonate (EC), ethyl methyl carbonate (EMC), and diethyl carbonate (DEC) were mixed at a volume ratio of 1:1:1, and then $LiPF_6$ was uniformly dissolved in the solution described above to obtain the electrolytic solution. The concentration of $LiPF_6$ in the electrolytic solution was 1 mol/L.

(7) Preparation of secondary battery: The positive electrode plate, the separator, and the negative electrode plate described above were stacked in sequence and wound to obtain a battery cell; and the battery cell was put into an outer packaging, the prepared electrolytic solution described above was added, followed by packaging, standing, formation, aging, and other procedures to obtain a secondary battery.

The secondary batteries of Examples 2-36 and Comparative Example were prepared using methods similar to that of Example 1 except that the parameters were adjusted. The different parameters are detailed in Table 1.

$LiMn_{0.4}Fe_{0.6}PO_4$ used in Examples 1-5, 12-23, and 30-35 of the present application was purchased from Dynanonic with the item number LMFP-D2.

$LiMn_{0.4}Fe_{0.6}PO_4$ used in Examples 6-11 of the present application was purchased from Dynanonic with item numbers LMFP-D1, LMFP-D3, LMFP-D4, LMFP-D5, LMFP-D6, and LMFP-D7.

$LiMn_{0.4}Fe_{0.6}PO_4$ used in Examples 24-29 and 36 of the present application was purchased from Dynanonic with item numbers LMFP-D8, LMFP-D9, LMFP-D10, LMFP-D11, LMFP-D12, LMFP-D13, and LMFP-D14, respectively.

$LiNi_{0.55}Co_{0.1}Mn_{0.35}O_2$ used in Examples 1-3, 6-11, 21-22, and 24-29 of the present application was purchased from Ronbay Technology with the item number N1.

$LiNi_{0.55}Co_{0.1}Mn_{0.35}O_2$ used in Examples 4-5 and 12-16 of the present application was purchased from Ronbay Technology with item numbers N2-N8, respectively.

$LiNi_{0.55}Co_{0.1}Mn_{0.35}O_2$ used in Example 17 and Example 36 of the present application was purchased from Ronbay Technology with the item number N9.

$LiNi_{0.34}Co_{0.33}Mn_{0.33}O_2$ used in Example 18 of the present application was purchased from Ronbay Technology with the item number N17.

$LiNi_{0.83}Co_{0.07}Mn_{0.1}O_2$ used in Example 19 of the present application was purchased from Ronbay Technology with the item number N18.

$LiNi_{0.9}Mn_{0.1}O_2$ used in Example 20 of the present application was purchased from Ronbay Technology with the item number N19.

$LiNi_{0.55}Co_{0.1}Mn_{0.35}O_2$ used in Example 23 of the present application was purchased from Ronbay Technology with the item number N10.

$LiNi_{0.55}Co_{0.1}Mn_{0.35}O_2$ used in Examples 30-35 of the present application was purchased from Ronbay Technology with item numbers N11-N16, respectively.

Table 1: Parameter results of Examples 1-36 and Comparative Example

| | First positive electrode active material | | | | Second positive electrode active material | | | | | | Mass ratio of the first positive electrode active material to the second positive electrode active material | Ratio of the thickness of the first positive electrode film layer to the thickness of the second positive electrode film layer | Thickness of the positive electrode film layer ($\mu$m) | Power capability of the positive electrode plate |
|---|---|---|---|---|---|---|---|---|---|---|---|---|---|---|
| | Chemical formula | Lithium ion diffusion coefficient ($cm^2 \cdot s^{-1}$) | Compaction density at 3 T (g/cm3) | Powder resistivity at 20 MPa ($\Omega \cdot cm$) | Chemical formula | Lithium ion diffusion coefficient ($cm^2 \cdot s^{-1}$) | Compaction density at 3 T (g/cm3) | Powder resistivity at 20 MPa ($\Omega \cdot cm$) | Crystal form | Dv10 particle size ($\mu$m) | | | | |
| Example 1 | $LiMn_{0.4}Fe_{0.6}PO_4$ | $1 \times 10^{-14}$ | 2.4 | 5000 | $LiNi_{0.55}Co_{0.1}Mn_{0.35}O_2$ | $1 \times 10^{-10}$ | 3.7 | 400 | Single crystal | 1.2 | 10% | 0.15 | 250 | 3.81 |
| Example 2 | $LiMn_{0.4}Fe_{0.6}PO_4$ | $1 \times 10^{-14}$ | 2.4 | 5000 | $LiNi_{0.55}Co_{0.1}Mn_{0.35}O_2$ | $1 \times 10^{-10}$ | 3.7 | 400 | Single crystal | 1.2 | 30% | 0.46 | 250 | 7.29 |
| Example 3 | $LiMn_{0.4}Fe_{0.6}PO_4$ | $1 \times 10^{-14}$ | 2.4 | 5000 | $LiNi_{0.55}Co_{0.1}Mn_{0.35}O_2$ | $1 \times 10^{-10}$ | 3.7 | 400 | Single crystal | 1.2 | 50% | 0.77 | 250 | 12.67 |
| Example 4 | $LiMn_{0.4}Fe_{0.6}PO_4$ | $1 \times 10^{-14}$ | 2.4 | 5000 | $LiNi_{0.55}Co_{0.1}Mn_{0.35}O_2$ | $1 \times 10^{-10}$ | 3.7 | 400 | Single crystal | 0.3 | 30% | 0.46 | 250 | 7.29 |
| Example 5 | $LiMn_{0.4}Fe_{0.6}PO_4$ | $1 \times 10^{-14}$ | 2.4 | 5000 | $LiNi_{0.55}Co_{0.1}Mn_{0.35}O_2$ | $1 \times 10^{-10}$ | 3.7 | 400 | Single crystal | 2 | 30% | 0.46 | 250 | 7.29 |
| Example 6 | $LiMn_{0.4}Fe_{0.6}PO_4$ | $1 \times 10^{-15}$ | 2.4 | 5000 | $LiNi_{0.55}Co_{0.1}Mn_{0.35}O_2$ | $1 \times 10^{-10}$ | 3.7 | 400 | Single crystal | 1.2 | 30% | 0.46 | 250 | 8.15 |
| Example 7 | $LiMn_{0.4}Fe_{0.6}PO_4$ | $1 \times 10^{-13}$ | 2.4 | 5000 | $LiNi_{0.55}Co_{0.1}Mn_{0.35}O_2$ | $1 \times 10^{-10}$ | 3.7 | 400 | Single crystal | 1.2 | 30% | 0.46 | 250 | 6.32 |
| Example 8 | $LiMn_{0.4}Fe_{0.6}PO_4$ | $1 \times 10^{-14}$ | 2.4 | 3000 | $LiNi_{0.55}Co_{0.1}Mn_{0.35}O_2$ | $1 \times 10^{-10}$ | 3.7 | 400 | Single crystal | 1.2 | 30% | 0.46 | 250 | 5.65 |
| Example 9 | $LiMn_{0.4}Fe_{0.6}PO_4$ | $1 \times 10^{-14}$ | 2.4 | 6000 | $LiNi_{0.55}Co_{0.1}Mn_{0.35}O_2$ | $1 \times 10^{-10}$ | 3.7 | 400 | Single crystal | 1.2 | 30% | 0.46 | 250 | 7.99 |
| Example 10 | $LiMn_{0.4}Fe_{0.6}PO_4$ | $1 \times 10^{-14}$ | 2.2 | 5000 | $LiNi_{0.55}Co_{0.1}Mn_{0.35}O_2$ | $1 \times 10^{-10}$ | 3.7 | 400 | Single crystal | 1.2 | 30% | 0.50 | 250 | 7.62 |

| | First positive electrode active material | | | | Second positive electrode active material | | | | | | Mass ratio of the first positive electrode active material to the second positive electrode active material | Ratio of the thickness of the first positive electrode film layer to the thickness of the second positive electrode film layer | Thickness of the positive electrode film layer (μm) | Power capability of the positive electrode plate |
| | Chemical formula | Lithium ion diffusion coefficient ($cm^2 \cdot s^{-1}$) | Compaction density at 3 T (g/cm3) | Powder resistivity at 20 MPa ($\Omega \cdot cm$) | Chemical formula | Lithium ion diffusion coefficient ($cm^2 \cdot s^{-1}$) | Compaction density at 3 T (g/cm3) | Powder resistivity at 20 MPa ($\Omega \cdot cm$) | Crystal form | Dv10 particle size (μm) | | | | |
|---|---|---|---|---|---|---|---|---|---|---|---|---|---|---|
| Example 11 | $LiMn_{0.4}Fe_{0.6}PO_4$ | $1\times10^{-14}$ | 2.9 | 5000 | $LiNi_{0.55}Co_{0.1}Mn_{0.35}O_2$ | $1\times10^{-10}$ | 3.7 | 400 | Single crystal | 1.2 | 30% | 0.38 | 250 | 6.63 |
| Example 12 | $LiMn_{0.4}Fe_{0.6}PO_4$ | $1\times10^{-14}$ | 2.4 | 5000 | $LiNi_{0.55}Co_{0.1}Mn_{0.35}O_2$ | $1\times10^{-11}$ | 3.7 | 400 | Single crystal | 1.2 | 30% | 0.46 | 250 | 6.32 |
| Example 13 | $LiMn_{0.4}Fe_{0.6}PO_4$ | $1\times10^{-14}$ | 2.4 | 5000 | $LiNi_{0.55}Co_{0.1}Mn_{0.35}O_2$ | $1\times10^{-9}$ | 3.7 | 400 | Single crystal | 1.2 | 30% | 0.46 | 250 | 8.15 |
| Example 14 | $LiMn_{0.4}Fe_{0.6}PO_4$ | $1\times10^{-14}$ | 2.4 | 5000 | $LiNi_{0.55}Co_{0.1}Mn_{0.35}O_2$ | $1\times10^{-10}$ | 3.7 | 200 | Single crystal | 1.2 | 30% | 0.46 | 250 | 10.31 |
| Example 15 | $LiMn_{0.4}Fe_{0.6}PO_4$ | $1\times10^{-14}$ | 2.4 | 5000 | $LiNi_{0.55}Co_{0.1}Mn_{0.35}O_2$ | $1\times10^{-10}$ | 3.7 | 550 | Single crystal | 1.2 | 30% | 0.46 | 250 | 6.22 |
| Example 16 | $LiMn_{0.4}Fe_{0.6}PO_4$ | $1\times10^{-14}$ | 2.4 | 5000 | $LiNi_{0.55}Co_{0.1}Mn_{0.35}O_2$ | $1\times10^{-10}$ | 3.6 | 400 | Single crystal | 1.2 | 30% | 0.45 | 250 | 7.19 |
| Example 17 | $LiMn_{0.4}Fe_{0.6}PO_4$ | $1\times10^{-14}$ | 2.4 | 5000 | $LiNi_{0.55}Co_{0.1}Mn_{0.35}O_2$ | $1\times10^{-10}$ | 3.75 | 400 | Single crystal | 1.2 | 30% | 0.47 | 250 | 7.34 |
| Example 18 | $LiMn_{0.4}Fe_{0.6}PO_4$ | $1\times10^{-14}$ | 2.4 | 5000 | $LiNi_{0.34}Co_{0.33}Mn_{0.33}O_2$ | $5\times10^{-10}$ | 3.7 | 400 | Single crystal | 1.2 | 30% | 0.46 | 250 | 7.90 |
| Example 19 | $LiMn_{0.4}Fe_{0.6}PO_4$ | $1\times10^{-14}$ | 2.4 | 5000 | $LiNi_{0.83}Co_{0.07}MnO_2$ | $8\times10^{-10}$ | 3.7 | 400 | Single crystal | 1.2 | 30% | 0.46 | 250 | 8.07 |
| Example 20 | $LiMn_{0.4}Fe_{0.6}PO_4$ | $1\times10^{-14}$ | 2.4 | 5000 | $LiNi_{0.9}Mn_{0.1}O_2$ | $5\times10^{-11}$ | 3.7 | 400 | Single crystal | 1.2 | 30% | 0.46 | 250 | 7.01 |

EP 4 645 477 A1

| | First positive electrode active material | | | | Second positive electrode active material | | | | | | Mass ratio of the first positive electrode active material to the second positive electrode active material | Ratio of the thickness of the first positive electrode film layer to the thickness of the second positive electrode film layer | Thickness of the positive electrode film layer ($\mu$m) | Power capability of the positive electrode plate |
|---|---|---|---|---|---|---|---|---|---|---|---|---|---|---|
| | Chemical formula | Lithium ion diffusion coefficient ($cm^2 \cdot s^{-1}$) | Compaction density at 3 T (g/cm3) | Powder resistivity at 20 MPa ($\Omega \cdot cm$) | Chemical formula | Lithium ion diffusion coefficient ($cm^2 \cdot s^{-1}$) | Compaction density at 3 T (g/cm3) | Powder resistivity at 20 MPa ($\Omega \cdot cm$) | Crystal form | Dv10 particle size ($\mu$m) | | | | |
| Example 21 | $LiMn_{0.4}Fe_{0.6}PO_4$ | $1 \times 10^{-14}$ | 2.4 | 5000 | $LiNi_{0.55}Co_{0.1}Mn_{0.35}O_2$ | $1 \times 10^{-10}$ | 3.7 | 400 | Single crystal | 1.2 | 60% | 0.93 | 250 | 17.19 |
| Example 22 | $LiMn_{0..4}Fe_{0.6}PO_4$ | $1 \times 10^{-14}$ | 2.4 | 5000 | $LiNi_{0.55}Co_{0.1}Mn_{0.35}O_2$ | $1 \times 10^{-10}$ | 3.7 | 400 | Single crystal | 1.2 | 5% | 0.08 | 250 | 2.93 |
| Example 23 | $LiMn_{0.4}Fe_{0.6}PO_4$ | $1 \times 10^{-14}$ | 2.4 | 5000 | $LiNi_{0.55}Co_{0.1}Mn_{0.35}O_2$ | $1 \times 10^{-10})$ | 3.7 | 400 | Single crystal | 2.5 | 30% | 0.46 | 250 | 7.29 |
| Example 24 | $LiMn_{0.4}Fe_{0.6}PO_4$ | $1 \times 10^{-16}$ | 2.4 | 5000 | $LiNi_{0.55}Co_{0.1}Mn_{0.35}O_2$ | $1 \times 10^{-10})$ | 3.7 | 400 | Single crystal | 1.2 | 30% | 0.46 | 250 | 8.93 |
| Example 25 | $LiMn_{0.4}Fe_{0.6}PO_4$ | $1 \times 10^{-12}$ | 2.4 | 5000 | $LiNi_{0.55}Co_{0.1}Mn_{0.35}O_2$ | $1 \times 10^{-10})$ | 3.7 | 400 | Single crystal | 1.2 | 30% | 0.46 | 250 | 5.16 |
| Example 26 | $LiMn_{0.4}Fe_{0.6}PO_4$ | $1 \times 10^{-14}$ | 2.4 | 2000 | $LiNi_{0.55}Co_{0.1}Mn_{0.35}O_2$ | $1 \times 10^{-10})$ | 3.7 | 400 | Single crystal | 1.2 | 30% | 0.46 | 250 | 4.61 |
| Example 27 | $LiMn_{0.4}Fe_{0.6}PO_4$ | $1 \times 10^{-14}$ | 2.4 | 10000 | $LiNi_{0.55}Co_{0.1}Mn_{0.35}O_2$ | $1 \times 10^{-10})$ | 3.7 | 400 | Single crystal | 1.2 | 30% | 0.46 | 250 | 10.31 |
| Example 28 | $LiMn_{0.4}Fe_{0.6}PO_4$ | $1 \times 10^{-14}$ | 1.9 | 5000 | $LiNi_{0.55}Co_{0.1}Mn_{0.35}O_2$ | $1 \times 10^{-10})$ | 3.7 | 400 | Single crystal | 1.2 | 30% | 0.58 | 250 | 8.20 |
| Example 29 | $LiMn_{0.4}Fe_{0.6}PO_4$ | $1 \times 10^{-14}$ | 3.1 | 5000 | $LiNi_{0.55}Co_{0.1}Mn_{0.35}O_2$ | $1 \times 10^{-10})$ | 3.7 | 400 | Single crystal | 1.2 | 30% | 0.36 | 250 | 6.42 |
| Example 30 | $LiMn_{0.4}Fe_{0.6}PO_4$ | $1 \times 10^{-14}$ | 2.4 | 5000 | $LiNi_{0.55}Co_{0.1}Mn_{0.35}O_2$ | $1 \times 10^{-12}$ | 3.7 | 400 | Single crystal | 1.2 | 30% | 0.46 | 250 | 5.16 |

(continued)

| | First positive electrode active material | | | | Second positive electrode active material | | | | | | Mass ratio of the first positive electrode active material to the second positive electrode active material | Ratio of the thickness of the first positive electrode film layer to the thickness of the second positive electrode film layer | Thickness of the positive electrode film layer (μm) | Power capability of the positive electrode plate |
| | Chemical formula | Lithium ion diffusion coefficient (cm²·s⁻¹) | Compaction density at 3 T (g/cm3) | Powder resistivity at 20 MPa (Ω·cm) | Chemical formula | Lithium ion diffusion coefficient (cm²·s⁻¹) | Compaction density at 3 T (g/cm3) | Powder resistivity at 20 MPa (Ω·cm) | Crystal form | Dv10 particle size (μm) | | | | |
|---|---|---|---|---|---|---|---|---|---|---|---|---|---|---|
| Example 31 | $LiMn_{0.4}Fe_{0.6}PO_4$ | $1\times10^{-14}$ | 2.4 | 5000 | $LiNi_{0.55}Co_{0.1}Mn_{0.35}O_2$ | $1\times10^{-8}$ | 3.7 | 400 | Single crystal | 1.2 | 30% | 0.46 | 250 | 8.93 |
| Example 32 | $LiMn_{0.4}Fe_{0.6}PO_4$ | $1\times10^{-14}$ | 2.4 | 5000 | $LiNi_{0.55}Co_{0.1}Mn_{0.35}O_2$ | $1\times10^{-10}$ | 3.7 | 100 | Single crystal | 1.2 | 30% | 0.46 | 250 | 14.58 |
| Example 33 | $LiMn_{0.4}Fe_{0.6}PO_4$ | $1\times10^{-14}$ | 2.4 | 5000 | $LiNi_{0.55}Co_{0.1}Mn_{0.35}O_2$ | $1\times10^{-10}$ | 3.7 | 700 | Single crystal | 1.2 | 30% | 0.46 | 250 | 5.51 |
| Example 34 | $LiMn_{0.4}Fe_{0.6}PO_4$ | $1\times10^{-14}$ | 2.4 | 5000 | $LiNi_{0.55}Co_{0.1}Mn_{0.35}O_2$ | $1\times10^{-10}$ | 3.1 | 400 | Single crystal | 1.2 | 30% | 0.39 | 250 | 6.67 |
| Example 35 | $LiMn_{0.4}Fe_{0.6}PO_4$ | $1\times10^{-14}$ | 2.4 | 5000 | $LiNi_{0.55}Co_{0.1}Mn_{0.35}O_2$ | $1\times10^{-10}$ | 4.2 | 400 | Single crystal | 1.2 | 30% | 0.53 | 250 | 7.77 |
| Example 36 | $LiMn_{0.4}Fe_{0.6}PO_4$ | $1\times10^{-14}$ | 2.2 | 5000 | $LiNi_{0.55}Co_{0.1}Mn_{0.35}O_2$ | $1\times10^{-10}$ | 3.75 | 400 | Single crystal | 1.2 | 90% | 1.53 | 250 | 87.62 |
| Comparative Example | $LiNi_{0.55}Co_{0.1}Mn_{0.35}O_2$ | $1\times10^{-10}$ | 3.7 | 400 | $LiMn_{0.4}Fe_{0.6}PO_4$ | $1\times10^{-14}$ | 2.4 | 5000 | / | / | 30% | 0.19 | 250 | 3.11 |

**Test Example**

(1) Test of the lithium ion diffusion coefficient of the positive electrode active material:

The lithium ion diffusion coefficient can be tested using conventional methods in the art, such as a CV method, an EIS method, a GITT method, or a PITT method, and calculated according to Fick's first law and second law.

Taking the GITT method as an example, the steps of testing the lithium ion diffusion coefficient of the first positive electrode active material or the second positive electrode active material are as follows:

The first positive electrode active material or the second positive electrode active material was ground into a powder microelectrode; and the powder microelectrode was connected to an electrochemical workstation to perform coulometric titration. The titration was performed at a test temperature of 25 °C with a pulse current of 20 $\mu$A, a titration time of 1 h, and an interval of 4 h (Note: to compare the effects of pulse current and time, a parallel experiment with 10 $\mu$A and 10 min may be performed). After obtaining the GITT curve, the lithium ion diffusion coefficient was calculated using the following formula:

$$D = \frac{4}{\pi} \left( \frac{V_m}{A \times F \times n} \right)^2 \left[ I_0 \left( \frac{dE}{dx} \right) \Big/ \left( \frac{dE}{d\sqrt{t}} \right) \right]^2 \quad (\text{t} \ll L^2/D)$$

where D is the lithium ion diffusion coefficient; $I_0$ is the applied pulse current of 20 $\mu$A; Vm is the molar volume of the positive electrode active material; F is the Faraday constant; A is the electrode surface area; n is the number of charges per lithium ion and n is 1; dE/dx is the slope of the coulometric titration curve, that is, the slope of the open circuit potential versus Li concentration curve at a certain concentration in the electrode; (dE)/(dt1/2) is the slope of the polarization voltage versus t1/2 curve. Reference can be made specifically to the literature: Xie et al., Solid State Ionics, 2007, 178:1218-1224; Yang et al., Electrochimica Acta, 2012, 66:88-93.

(2) Test of the compaction density of the positive electrode active material:

2.0 g of the positive electrode active material powder was weighed and placed in a die of a UTM7305 type electronic compression tester, the pressure was adjusted to 3 tons, and after 30 s of pressure holding, the height value of the positive electrode active material powder compact was read. The compaction density P.D of the positive electrode active material at a pressure of 3 tons was calculated using the following formula:

$$\text{P.D} = \omega/(\alpha \times \text{h})$$

In the formula, $\omega$ is the mass (g) of the positive electrode active material powder; $\alpha$ is the bottom area of the die (cm$^2$); and h is the height value (cm) of the positive electrode active material powder compact.

(3) Test of the powder resistivity of the positive electrode active material:

The powder of the positive electrode active material was dried, an appropriate amount of the powder was weighed and placed in a sample chamber (with a depth of 20 mm and a cross-sectional area of 1 cm$^2$) of a powder resistivity tester (Suzhou Jingge, model: ST2722), pressure was gradually applied from low to high until it reached 20 MPa, and then the test result of the powder resistivity at 20 MPa was recorded.

(4) Test of crystal type:

The positive electrode active material was tested using a scanning electron microscope. The sample and the magnification were adjusted, such that the field of view contained more than 10 agglomerated particles; the number of primary particles composing each agglomerated particle was counted, and the size of the primary particle in a length direction was measured using a scale and recorded as the particle size; the particle sizes of the primary particles in each agglomerated particle were sorted from large to small; and 1/10 of the maximum particle size data and 1/10 of the minimum particle size data were excluded, and the average of the remaining particle size data was taken as the average particle size of the primary particles in the agglomerated particle. If the number and average particle size of the primary particles in more than 50% (including 50%) of the agglomerated particles meet the definition of "polycrystalline material particle", the positive electrode active material was determined to be a polycrystalline material; otherwise, it was determined to be a single crystal material.

(5) Test of Dv10 particle size:

The test was performed using a laser particle size analyzer (Malvern, Mastersizer 2000E), the solvent used in the test was water, and ultrasound was used for dispersion.

(6) Test of the thickness of the positive electrode film layer:

The method for testing the thickness of the positive electrode film layer is: using a micrometer (Mitutoyo, MDH-25MB).

(7) Test of low-temperature power:

Referring to methods in GB/T 19596 and GB/T 31486, the power of the battery at 253K and 5% SOC was tested using a battery charging and discharging machine and a high and low temperature box.

(8) Test of fast-charging time:

Under a constant temperature environment of 25 °C, the soft-pack stacked battery was subjected to charging tests at different rates (C1 < C2 < C3 < C4<...< Cn), and the charging rates during the test were in an increasing order. During charging, the voltage of the soft-pack stacked battery at full charge and the negative electrode voltage of the soft-pack stacked battery need to be monitored simultaneously. The specific process was as follows: The soft-pack stacked battery was charged at C1 to the full charge voltage of 4.4 V or the negative electrode voltage of 0 V to obtain the SOC value of the battery at the end of charging, and the battery was then discharged at 0.33C to the full discharge voltage of 2.5 V; the process described above was repeated according to the charging rates in an increasing order to obtain the SOC values at the end of charging at different rates; the SOC values at the end of charging were fitted with the corresponding rate values to obtain an equation between the SOC at the end of charging and the rate values; 100% SOC was substituted into the equation to obtain the corresponding Ci; and the time required to charge the battery to the cut-off voltage using constant current-constant voltage charging at a charging rate of Ci was the fast-charging time.

(9) Test of cycle performance:

Under a constant temperature environment of 25 °C, the battery was charged from 2.5 V to 4.25-4.3 V at 0.5C, and then charged at a constant voltage of 4.25-4.3 V to the current ≤ 0.05 mA; the battery was left to stand for 5 min, and then discharged to 2.5 V at 0.5C; the discharge capacity of the first cycle of the battery was recorded as $D_1$; the operation described above was repeated, and the discharge capacity of each cycle was recorded as $D_n$ (n = 2, 3...); and the state of health (SOH) of the battery cell was calculated according to the following formula, and the number of cycles n was recorded when the state of health reached 80% SOH.

$$\text{State of health of the battery cell} = 100\% \times D_n/D_3 \quad .$$

(10) Test of low-temperature discharge capacity retention rate:

Under a constant temperature environment of 25 °C, the battery was left to stand for 30 min and discharged at a constant current of 0.33C to a lower cut-off voltage of 2.5 V; the battery was left to stand for 5 min, charged at a constant current of 0.33C to an upper cut-off voltage of 4.4 V, and charged at a constant voltage to a current < 0.05C; the battery was left to stand for 5 min and discharged at a constant current of 0.33C to a lower cut-off voltage of 2.5 V. The discharge capacity at this time was recorded as the initial discharge capacity C0.

The battery was operated at -5 °C according to the process described above and the discharge capacity Cn was recorded. The low-temperature discharge capacity retention rate of the battery at -5 °C was calculated according to the following formula.

$$\text{Low-temperature discharge capacity retention rate} = 100\% \times Cn/C0$$

The above results are shown in Table 2.

Table 2: Performance test results of Examples 1-36 and Comparative Example

| | Low-temperature power (W) | Fast-charging time (min) | 80% SOH cycle life (cycles) | Low-temperature discharge capacity retention rate |
|---|---|---|---|---|
| Example 1 | 571.95 | 41.6 | 804 | 82% |
| Example 2 | 1093.84 | 57.3 | 1699 | 85% |
| Example 3 | 1899.97 | 75.6 | 1971 | 74% |
| Example 4 | 984.46 | 63.03 | 1359.2 | 84% |
| Example 5 | 1006.34 | 64.92 | 1444.15 | 84% |
| Example 6 | 3459.03 | 101.9 | 1543 | 81% |
| Example 7 | 345.90 | 32.2 | 1101 | 86% |
| Example 8 | 847.29 | 50.5 | 1174 | 83% |
| Example 9 | 1198.24 | 60 | 1392 | 83% |
| Example 10 | 1142.48 | 58.6 | 1344 | 84% |
| Example 11 | 995.09 | 54.7 | 1212 | 84% |
| Example 12 | 345.90 | 32.5 | 1255 | 78% |
| Example 13 | 2459.03 | 101.9 | 1684 | 91% |
| Example 14 | 1546.93 | 68.2 | 1689 | 86% |
| Example 15 | 932.83 | 53 | 1155 | 84% |
| Example 16 | 1078.96 | 56.9 | 1287 | 84% |
| Example 17 | 1101.21 | 57.6 | 1311 | 84% |
| Example 18 | 1041.21 | 43.1 | 1432 | 90% |
| Example 19 | 1122.43 | 55.2 | 1322 | 91% |
| Example 20 | 967.81 | 68 | 742 | 71% |
| Example 21 | 2578.09 | 88 | 2475 | 54% |
| Example 22 | 439.61 | 36.5 | 660 | 80% |
| Example 23 | 905.70 | 68.17 | 1010.91 | 84% |
| Example 24 | 2655.00 | 181.2 | 963 | 66% |
| Example 25 | 109.38 | 18.3 | 534 | 87% |
| Example 26 | 691.81 | 45.6 | 921 | 85% |
| Example 27 | 1546.93 | 68.3 | 792 | 81% |
| Example 28 | 1229.37 | 60.8 | 822 | 84% |
| Example 29 | 962.45 | 53.8 | 782 | 84% |
| Example 30 | 109.38 | 18.3 | 734 | 72% |
| Example 31 | 2338.43 | 181.2 | 717 | 88% |
| Example 32 | 2187.69 | 81.1 | 890 | 85% |
| Example 33 | 826.87 | 49.8 | 853 | 83% |
| Example 34 | 1001.23 | 54.9 | 1218 | 84% |
| Example 35 | 1165.41 | 59.2 | 1365 | 84% |
| Example 36 | 2514.25 | 198.6 | 765 | 84% |

(continued)

|  | Low-temperature power (W) | Fast-charging time (min) | 80% SOH cycle life (cycles) | Low-temperature discharge capacity retention rate |
|---|---|---|---|---|
| Comparative Example | / | 220 | 431 | / |
| "/" indicates not tested. | | | | |

According to the results described above, it can be seen that:
Compared with the Comparative Example, the batteries of Examples 1-36 of the present application have shorter fast-charging time and longer cycle life.

Compared with Example 24 of the present application, the batteries of Examples 1-20 of the present application have shorter fast-charging time and higher low-temperature discharge capacity retention rate, and Examples 2-19 of the present application have longer cycle life.

Compared with Example 25 of the present application, the batteries of Examples 1-20 of the present application have higher low-temperature power, longer cycle life, and higher low-temperature discharge capacity retention rate.

Compared with Example 26 of the present application, the batteries of Examples 2-6, 8-11, and 13-20 of the present application have higher low-temperature power, and the batteries of Examples 2-19 of the present application have longer cycle life.

Compared with Example 27 of the present application, the batteries of Examples 1-2, 4-5, 7-11, and 14-19 of the present application have shorter fast-charging time and higher low-temperature discharge capacity retention rate, and the batteries of Examples 1-19 of the present application have longer cycle life.

Compared with Example 28 of the present application, the batteries of Examples 1-2, 7-12, and 15-19 of the present application have shorter fast-charging time, and the batteries of Examples 2-19 of the present application have longer cycle life.

Compared with Example 29 of the present application, the batteries of Examples 2-6, 9-11, 13-14, 16-20 of the present application have higher low-temperature power, and the batteries of Examples 1-19 of the present application have longer cycle life.

Compared with Example 30 of the present application, the batteries of Examples 1-19 of the present application have higher low-temperature power, longer cycle life, and higher low-temperature discharge capacity retention rate.

Compared with Example 31 of the present application, the batteries of Examples 1-20 of the present application have shorter fast-charging time and longer cycle life.

Compared with Example 32 of the present application, the batteries of Examples 1-5, 7-12, and 14-20 of the present application have shorter fast-charging time, and the batteries of Examples 2-19 of the present application have longer cycle life.

Compared with Example 33 of the present application, the batteries of Examples 2-6, 8-11, and 13-20 of the present application have higher low-temperature power, and the batteries of Examples 2-19 of the present application have longer cycle life.

Compared with Example 36 of the present application, the batteries of Examples 1-19 of the present application have shorter fast-charging time and longer cycle life.

It should be noted that the present application is not limited to the embodiments described above. The embodiments described above are merely examples, and any embodiments having a structure substantially identical to the technical concept and exerting the same functional effects within the scope of the technical solutions of the present application are all included within the technical scope of the present application. Furthermore, without departing from the spirit of the present application, various modifications that can be conceived by those skilled in the art to the embodiments, as well as other embodiments formed by combining some of the constituent elements of the embodiments, are also included within the scope of the present application.

## Claims

1. A positive electrode plate, comprising a positive electrode current collector and a positive electrode film layer disposed on at least one surface of the positive electrode current collector, wherein the positive electrode film layer comprises a first positive electrode film layer disposed on a surface of the positive electrode current collector and a second positive electrode film layer disposed on a surface of the first positive electrode film layer, wherein the first positive electrode film layer comprises a first positive electrode active material, and the second positive electrode film layer comprises a second positive electrode active material;

the first positive electrode active material comprises a compound $Li_aA_bMn_{1-c}B_cP_{1-d}R_dO_{4-n}D_n$, wherein
A comprises one or more elements of Zn, Al, Na, K, Mg, Nb, Mo, and W;
B comprises one or more elements of Zn, Al, Na, K, Mg, Mo, W, Ti, V, Zr, Fe, Ni, Co, Ga, Sn, Sb, Nb, and Ge;
R comprises one or more elements of B, Si, N, S, F, Cl, and Br;
D comprises one or more elements of S, F, Cl, and Br;
a is 0.9 to 1.1; b is 0 to 0.1; c is 0.001 to 0.9; d is 0 to 0.1; n is 0 to 0.1; and
the second positive electrode active material comprises a compound $Li_xNi_yCo_zM_kMe_pO_rE_m$, wherein M comprises one or two elements of Mn and Al; Me comprises one or more elements of Zr, Zn, Cu, Cr, Mg, Fe, V, Ti, Sr, Sb, Y, W, and Nb; E comprises one or more elements of N, F, S, and Cl; $0.85 \leq x \leq 1.15$; $0 < y \leq 1$; $0 \leq z < 1$; $0 < k < 1$; $0 \leq p \leq 0.1$; and $1 \leq r \leq 2$, $0 \leq m \leq 1$, and $m + r \leq 2$.

2. The positive electrode plate according to claim 1, wherein B comprises one or more elements of Fe, Ti, V, Ni, Co, and Mg; and/or
   R comprises any one of B, Si, N and S elements.

3. The positive electrode plate according to claim 1 or 2, wherein a mass ratio of the first positive electrode active material to the second positive electrode active material is 5%-90%, optionally 10%-50%.

4. The positive electrode plate according to any one of claims 1 to 3, wherein a lithium ion diffusion coefficient of the second positive electrode active material is greater than a lithium ion diffusion coefficient of the first positive electrode active material.

5. The positive electrode plate according to any one of claims 1 to 4, wherein a compaction density of the second positive electrode active material at a pressure of 3 tons is greater than a compaction density of the first positive electrode active material at a pressure of 3 tons.

6. The positive electrode plate according to any one of claims 1 to 5, wherein the second positive electrode active material is a single crystal or single-crystal-like material; and/or
   a Dv10 particle size of the second positive electrode active material is 0.3-2.5 $\mu$m, optionally 0.5-1.5 $\mu$m.

7. The positive electrode plate according to any one of claims 1 to 6, wherein a lithium ion diffusion coefficient of the first positive electrode active material at 25 °C is $10^{-16}$-$10^{-12}$ cm$^2$·s$^{-1}$, optionally $10^{-15}$-$10^{-13}$ cm$^2$·s$^{-1}$; and/or

   a powder resistivity of the first positive electrode active material at 20 MPa is 2000-10000 $\Omega$·cm, optionally 3000-6000 $\Omega$·cm; and/or
   a compaction density of the first positive electrode active material at a pressure of 3 tons is 1.9-3.1 g/cm$^3$, optionally 2.2-2.9 g/cm$^3$.

8. The positive electrode plate according to any one of claims 1 to 7, wherein a lithium ion diffusion coefficient of the second positive electrode active material at 25 °C is $10^{-12}$-$10^{-8}$ cm$^2$·s$^{-1}$, optionally $10^{-11}$-$10^{-9}$ cm$^2$·s$^{-1}$; and/or

   a powder resistivity of the second positive electrode active material at 20 MPa is 100-700 $\Omega$·cm, optionally 200-550 $\Omega$·cm; and/or
   a compaction density of the second positive electrode active material at a pressure of 3 tons is 3-4.2 g/cm$^3$, optionally 3.6-3.75 g/cm$^3$.

9. The positive electrode plate according to any one of claims 1 to 8, wherein a ratio of a thickness of the first positive electrode film layer to a thickness of the second positive electrode film layer is 0.08-1.53, optionally 0.1-1.2, and more optionally 0.15-0.93; and/or
   a thickness of the positive electrode film layer is 60-300 $\mu$m.

10. The positive electrode plate according to any one of claims 1 to 9, wherein a power capability m of the positive electrode plate is calculated according to the following formula, and m is 2.93-87.62, optionally 3-13, and more optionally 3.81-12.67;

$$m = \sqrt{-\log_{10}\left(\frac{C_B \times PD_B \times N_A \times \ln M}{C_A \times PD_A \times N_B}\right)}$$

wherein

$PD_A$ represents a compaction density of the first positive electrode active material at a pressure of 3 tons in g/cm$^3$;

$C_A$ represents a lithium ion diffusion coefficient of the first positive electrode active material at 25 °C in cm$^2$·s$^{-1}$;

$N_A$ represents a powder resistivity of the first positive electrode active material at 20 MPa in $\Omega$·cm;

$PD_B$ represents a compaction density of the second positive electrode active material at a pressure of 3 tons in g/cm$^3$;

$C_B$ represents a lithium ion diffusion coefficient of the second positive electrode active material at 25 °C in cm$^2$·s$^{-1}$;

$N_B$ represents a powder resistivity of the second positive electrode active material at 20 MPa in $\Omega$·cm;

M represents a mass ratio of the first positive electrode active material to the second positive electrode active material.

11. The positive electrode plate according to any one of claims 1 to 10, wherein the first positive electrode active material comprises a core and a cladding layer coating the core, wherein the core comprises the compound $Li_aA_bMn_{1-c}B_cP_{1-d}R_dO_{4-n}D_n$, and the cladding layer comprises one or more of pyrophosphate, phosphate, and carbon.

12. The positive electrode plate according to any one of claims 1 to 11, wherein the second positive electrode active material comprises a core and a cladding layer coating the core, wherein the core comprises the compound $Li_xNi_yCo_zM_kMe_pO_rE_m$, and the cladding layer comprises one or more elements of Al, Ba, Zn, Ti, Co, W, Y, Si, Sn, B, and P.

13. A battery, comprising the positive electrode plate according to any one of claims 1 to 12.

14. An electric device, comprising the positive electrode plate according to any one of claims 1 to 12 or the battery according to claim 13.

FIG. 1

FIG. 2

FIG. 3

FIG. 4

FIG. 5

FIG. 6

## INTERNATIONAL SEARCH REPORT

| International application No. |
|---|
| **PCT/CN2023/091177** |

| A. | CLASSIFICATION OF SUBJECT MATTER |
|---|---|

H01M4/66(2006.01)i; H01M4/505(2010.01)i; H01M4/525(2010.01)i

According to International Patent Classification (IPC) or to both national classification and IPC

| B. | FIELDS SEARCHED |
|---|---|

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNTXT, WPI, VEN, WPABSC, ENTXTC, CNKI: 电池, 正极, 第二活性, 第二涂层, 第二膜层, 两层, 双层, 质量比, 重量比, 扩散系数, 电阻率, 压实密度, 单晶, 包覆, 碳, battery, cell, anode, second, two, layer?, film?, mass, weight, ratio, diffusi+, coefficient, resistivity, single, crystal, cladding, coat+, carbon

| C. | DOCUMENTS CONSIDERED TO BE RELEVANT | |
|---|---|---|

| Category* | Citation of document, with indication, where appropriate, of the relevant passages | Relevant to claim No. |
|---|---|---|
| X | CN 111200132 A (NINGDE CONTEMPORARY AMPEREX TECHNOLOGY CO., LTD.) 26 May 2020 (2020-05-26) description, paragraphs [0002], [0012]-[0014], [0020]-[0024], and [0064]-[0087], and claims 1-10 | 1-3, 5, 9-14 |
| Y | CN 111200132 A (NINGDE CONTEMPORARY AMPEREX TECHNOLOGY CO., LTD.) 26 May 2020 (2020-05-26) description, paragraphs [0002], [0012]-[0014], [0020]-[0024], and [0064]-[0087], and claims 1-10 | 4, 6-8 |
| Y | CN 111446488 A (NINGDE CONTEMPORARY AMPEREX TECHNOLOGY CO., LTD.) 24 July 2020 (2020-07-24) description, paragraphs [0039]-[0044] | 4, 6-8 |
| X | CN 111200159 A (NINGDE CONTEMPORARY AMPEREX TECHNOLOGY CO., LTD.) 26 May 2020 (2020-05-26) description, paragraphs [0028]-[0085] | 1-3, 5, 9-14 |

| ✓ Further documents are listed in the continuation of Box C. | ✓ See patent family annex. |
|---|---|

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **15 September 2023** | **25 December 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

International application No.

**PCT/CN2023/091177**

**C.      DOCUMENTS CONSIDERED TO BE RELEVANT**

| Category* | Citation of document, with indication, where appropriate, of the relevant passages | Relevant to claim No. |
|---|---|---|
| Y | CN 111200159 A (NINGDE CONTEMPORARY AMPEREX TECHNOLOGY CO., LTD.) 26 May 2020 (2020-05-26) description, paragraphs [0028]-[0085] | 4, 6-8 |
| A | WO 2014049985 A1 (SANYO ELECTRIC CO., LTD.) 03 April 2014 (2014-04-03) entire document | 1-14 |

Form PCT/ISA/210 (second sheet) (July 2022)

27

## INTERNATIONAL SEARCH REPORT
### Information on patent family members

International application No.

**PCT/CN2023/091177**

| Patent document cited in search report | | | Publication date (day/month/year) | Patent family member(s) | | | Publication date (day/month/year) |
|---|---|---|---|---|---|---|---|
| CN | 111200132 | A | 26 May 2020 | WO | 2020098783 | A1 | 22 May 2020 |
| | | | | EP | 3654422 | A1 | 20 May 2020 |
| | | | | EP | 3654422 | B1 | 25 August 2021 |
| | | | | US | 2020161631 | A1 | 21 May 2020 |
| | | | | US | 11664486 | B2 | 30 May 2023 |
| | | | | CN | 111200132 | B | 18 May 2021 |
| CN | 111446488 | A | 24 July 2020 | None | | | |
| CN | 111200159 | A | 26 May 2020 | WO | 2020098742 | A1 | 22 May 2020 |
| | | | | EP | 3683874 | A1 | 22 July 2020 |
| | | | | EP | 3683874 | B1 | 03 November 2021 |
| | | | | ES | 2901391 | T3 | 22 March 2022 |
| | | | | PT | 3683874 | T | 10 December 2021 |
| | | | | US | 2020161641 | A1 | 21 May 2020 |
| | | | | US | 11264611 | B2 | 01 March 2022 |
| | | | | CN | 111200159 | B | 23 March 2021 |
| WO | 2014049985 | A1 | 03 April 2014 | JP | 2015232921 | A | 24 December 2015 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **XIE et al.** *Solid State Ionics*, 2007, vol. 178, 1218-1224

- **YANG et al.** *Electrochimica Acta*, 2012, vol. 66, 88-93